(19) **Europäisches Patentamt / European Patent Office / Office européen des brevets**

(11) **EP 3 994 042 B1**

(12) **FASCICULE DE BREVET EUROPEEN**

(45) Date de publication et mention de la délivrance du brevet:
**06.11.2024 Bulletin 2024/45**

(21) Numéro de dépôt: **20730269.6**

(22) Date de dépôt: **04.06.2020**

(51) Classification Internationale des Brevets (IPC):
**B60W 30/09** (2012.01)    **G05D 1/00** (2024.01)
**B60W 50/00** (2006.01)    **B60W 30/095** (2012.01)

(52) Classification Coopérative des Brevets (CPC):
**B60W 50/0097; B60W 30/09; B60W 30/095;**
**B60W 30/0953; B60W 30/0956;** B60W 2554/20;
B60W 2554/40; B60W 2554/80; B60W 2554/802

(86) Numéro de dépôt international:
**PCT/EP2020/065449**

(87) Numéro de publication internationale:
**WO 2021/001112 (07.01.2021 Gazette 2021/01)**

(54) **PROCÉDÉ DE DÉTERMINATION D'UNE TRAJECTOIRE D'ÉVITEMENT D'UN VÉHICULE AUTOMOBILE**

VERFAHREN ZUR BESTIMMUNG EINES AUSWEICHWEGES EINES KRAFTFAHRZEUGES

METHOD FOR DETERMINING AN AVOIDANCE PATH OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.07.2019 FR 1907351**

(43) Date de publication de la demande:
**11.05.2022 Bulletin 2022/19**

(73) Titulaires:
• **Ampere SAS**
  **92100 Boulogne-Billancourt (FR)**
• **NISSAN MOTOR Co., Ltd.**
  **Yokohama-shi, Kanagawa 221-0023 (JP)**

(72) Inventeurs:
• **BRUNO, Geoffrey**
  **92130 Issy les Moulineaux (FR)**
• **BLANCO, Yann**
  **75017 paris (FR)**
• **DO, Anh Lam**
  **92160 Antony (FR)**
• **HADDAD, Alain**
  **78180 Montigny le bretonneux (FR)**

(74) Mandataire: **Renault Group**
  **Renault s.a.s.**
  **1 avenue du Golf**
  **FR TCR AVA 055**
  **78084 Guyancourt Cedex (FR)**

(56) Documents cités:
DE-A1- 102012 017 628    DE-A1- 102013 009 252
DE-A1- 102013 010 004    DE-A1- 102014 206 341
US-A1- 2012 330 541    US-A1- 2018 099 667
US-A1- 2019 086 925

EP 3 994 042 B1

**Description**

DOMAINE TECHNIQUE DE L'INVENTION

La présente invention concerne de manière générale les aides à la conduite de véhicule automobile et les véhicules autonomes.

Elle concerne plus particulièrement un procédé de détermination d'une trajectoire d'évitement d'un véhicule automobile après qu'un obstacle a été détecté sur la trajectoire de ce véhicule.

Elle concerne également un dispositif permettant de mettre en oeuvre un tel procédé.

ETAT DE LA TECHNIQUE

Dans un souci de sécurisation des véhicules automobiles, on équipe actuellement ces derniers de systèmes d'aide à la conduite ou de système de conduite autonome.

Parmi ces systèmes, on connait notamment des systèmes d'évitement automatique (plus connu sous l'abréviation AES, de l'anglais « Automatic Evasive Steering » ou « Automatic Emergency Steering ») qui permettent d'éviter un obstacle en déviant le véhicule de sa trajectoire, soit en agissant sur la direction du véhicule, soit en agissant sur le système de freinage différentiel du véhicule.

Le document US 2018/099667 A1 montre un système d'aide à la conduite qui génère des trajectoires pour éviter les collisions. Le document DE102013009252 décrit un système permettant de calculer une trajectoire d'évitement et de piloter un organe de commande du véhicule de façon à suivre cette trajectoire d'évitement.

Dans ce document, la trajectoire d'évitement est calculée sur la base d'une position initiale, d'une position finale souhaitée du véhicule et d'un modèle polynomial de trajectoire.

La demanderesse a toutefois constaté qu'il arrive que la trajectoire d'évitement ainsi calculée ne soit pas suffisamment confortable voire sécurisante.

PRESENTATION DE L'INVENTION

Afin de remédier à tout ou partie de ces inconvénients précités de l'état de la technique, la présente invention propose une nouvelle solution de calcul de la trajectoire d'évitement.

Plus particulièrement, on propose selon l'invention un procédé de détermination d'une trajectoire d'évitement d'un véhicule selon la revendication 1.

Ainsi, grâce à l'invention, il est prévu de détecter la position dynamique d'un point théorique dit d'impact, qui est la position limite par laquelle on s'interdit de passer afin d'éviter de percuter l'obstacle, ou plusieurs obstacles, ceci en respectant une distance minimale de sécurité entre le véhicule et chacun des obstacles. De plus, l'invention permet d'éviter le calcul d'une trajectoire d'évitement provisoire.

Préférentiellement, ladite au moins une distance de sécurité minimale est orientée par rapport au véhicule automobile, de façon à présenter au moins une composante longitudinale par rapport à l'axe longitudinal du véhicule automobile, et préférentiellement aussi une composante latérale.

Ainsi grâce à l'invention ladite distance minimale de sécurité est calculée en fonction du mouvement de la cible en utilisant les vitesses longitudinale et latérale, ce qui permet de rendre plus robuste cette distance de sécurité en vue de l'évitement d'obstacle en dépit d'éventuelles erreurs des capteurs de rayon de sécurité.

D'autres caractéristiques avantageuses et non limitatives du procédé conforme à l'invention, sont les suivantes :

- pour déterminer la position d'impact, il est prévu de déterminer la position d'un premier point de l'obstacle le plus proche d'une trajectoire d'évitement prévisionnelle sur la base des données acquises par le système de détection, et de déduire la position d'impact théorique en fonction de la position dudit premier point et d'au moins une autre donnée ;
- ladite autre donnée appartient à la liste suivante : une incertitude prédéterminée du système de détection, la nature de l'obstacle, la vitesse relative de l'obstacle par rapport au véhicule automobile ;
- il est prévu de déterminer une zone de sécurité autour dudit au moins un obstacle en fonction de la distance minimale et éventuellement aussi de ladite au moins une autre donnée ;
- pour déterminer la position du point d'impact, il est prévu de déterminer les vitesses relatives longitudinale et latérale relative de l'obstacle par rapport au véhicule automobile, d'en déduire un temps avant impact théorique entre le véhicule automobile et l'obstacle, de déterminer la position de l'obstacle à un temps ultérieur correspondant au temps avant impact théorique, et d'en déduire la position d'impact théorique ;
- l'étape de détermination de la position de l'obstacle est mise en oeuvre seulement si le temps avant impact théorique est inférieur à un seuil prédéterminé ;

- la trajectoire d'évitement est élaborée de manière à satisfaire une contrainte qui porte sur le passage de la trajectoire d'évitement par l'extérieur de la position d'impact théorique;
- si aucune trajectoire d'évitement ayant des dérivées qui répondent auxdites contraintes d'inégalité n'est trouvée, il est prévu une étape d'ajustement de la position finale du véhicule automobile puis une nouvelle étape d'élaboration de la trajectoire d'évitement ;
- la trajectoire d'évitement est élaborée au moyen d'une méthode d'optimisation convexe, notamment par une méthode des sommes des carrés ou par échantillonnage ;
- le véhicule automobile roulant à son arrivée à la position initiale selon une trajectoire initiale, il est prévu une opération de détermination d'une seconde partie de la trajectoire d'évitement permettant le retour du véhicule automobile sur la trajectoire initiale, qui comporte des étapes de détermination d'une seconde position finale en fonction de la position de l'obstacle par rapport au véhicule automobile et en fonction de ladite position finale, de détermination d'une seconde position d'impact théorique située entre la position finale et la seconde position finale, en fonction au moins d'une distance minimale à respecter entre la trajectoire d'évitement et l'obstacle, et de détermination de la seconde partie de la trajectoire d'évitement de sorte que le véhicule automobile passe par la seconde position finale et évite la seconde position d'impact théorique par l'extérieur par rapport à l'obstacle.

L'invention porte également sur un système de détermination d'une trajectoire d'évitement d'un véhicule automobile comprenant :

- un système de détection configuré à acquérir des données relatives à un obstacle situé dans l'environnement du véhicule automobile, et
- un calculateur apte à mettre en oeuvre un procédé tel que précité.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

## DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :

La figure 1 est une vue schématique de dessus d'un véhicule automobile ;
La figure 2 est une représentation schématique d'une première partie d'une trajectoire d'évitement d'un obstacle ;
La figure 3 est une vue schématique de dessus de l'obstacle de la figure 2 et de différentes zones de sécurité autour de l'obstacle ;
La figure 4 est une autre vue schématique de dessus de l'obstacle de la figure 2 et d'une autre zone de sécurité ;
La figure 5 est représentation schématique de l'ensemble de la trajectoire d'évitement d'obstacle.

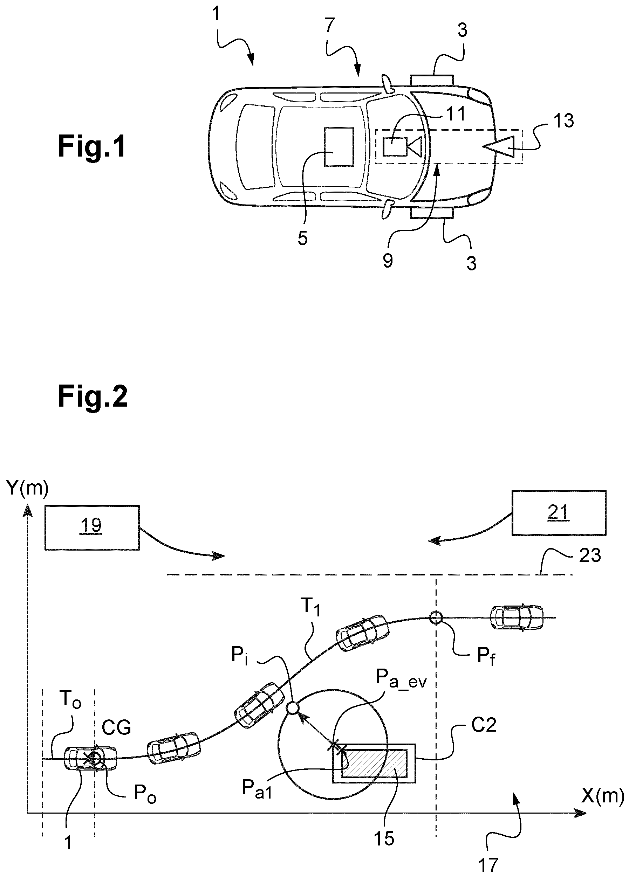

Sur la figure 1, on a représenté un véhicule automobile 1. Le véhicule ici représenté est une voiture, mais il pourrait bien entendu s'agir d'un autre type de véhicule, typiquement d'un camion.

Ce véhicule automobile 1 comprend deux roues avant 3 directrices.

Il comporte en outre un système de direction conventionnel permettant d'agir sur l'orientation des roues avant 3 de façon à pouvoir faire tourner le véhicule.

Le système de direction comprend un organe de commande, et plus précisément un actionneur permettant d'agir sur l'orientation (c'est-à-dire le braquage) des roues avant en fonction de l'orientation du volant et/ou en fonction d'une requête reçue d'un calculateur 5. Ce calculateur 5 est par exemple un calculateur dédié aux aides à la conduite.

En complément, le véhicule automobile peut comporter un système de freinage différentiel commandé par le même 5 ou un autre calculateur et permettant d'agir différemment sur les vitesses de rotation des roues avant de façon à ralentir le véhicule automobile en le faisant tourner.

Le calculateur 5 est programmé pour piloter l'actionneur de direction assistée et éventuellement aussi l'actionneur de freinage différentiel. Il comporte à cet effet au moins un processeur, au moins une mémoire et différentes interfaces d'entrée et de sortie.

Grâce à ses interfaces d'entrée, le calculateur 5 est adapté à recevoir des signaux d'entrée provenant d'un système de détection 9.

Ce système de détection 9 comprend ici différents capteurs.

Parmi ces capteurs, il est ici notamment prévu une caméra frontale 11, permettant de repérer la position du véhicule automobile 1 par rapport à sa voie de circulation.

Il est en outre prévu une unité de télémétrie 13 comprenant au moins un capteur de télémétrie (RADAR, LIDAR, SONAR) placé à l'avant du véhicule automobile 1. L'unité de télémétrie 13 peut en outre comprendre une pluralité de capteurs de télémétrie placés sur les côtés du véhicule et permettant d'observer l'environnement de chaque côté du véhicule automobile 1.

Le système de détection 9 comprend enfin des capteurs de données relatives au véhicule automobile 1, tel qu'un gyromètre permettant de déterminer la vitesse de rotation en lacet (autour d'un axe vertical) du véhicule automobile 1, et un capteur de position et/ou de vitesse angulaire du volant.

Grâce à ses interfaces de sortie, le calculateur 5 est adapté à transmettre une consigne à l'actionneur de direction assistée et éventuellement aussi l'actionneur de freinage différentiel.

Le calculateur 5 comprend une mémoire dans laquelle sont mémorisées des données utilisées dans le cadre du procédé décrit ci-dessous.

Il mémorise notamment une application informatique, constituée de programmes d'ordinateur comprenant des instructions dont l'exécution par le processeur permet la mise en oeuvre par le calculateur du procédé décrit ci-après.

Ces différents composants forment ensemble un système 7 de détermination d'une trajectoire d'évitement d'obstacle.

La figure 2 est une vue schématique de dessus du véhicule automobile 1 de la figure 1, représenté dans cinq positions successives situées le long d'une trajectoire d'évitement T1 d'un obstacle 15.

La description de la trajectoire d'évitement T1 est faite dans un repère (XY) fixe. L'axe X du repère est, de préférence, parallèle à la voie de circulation 17 du véhicule automobile 1 quand celle-ci est rectiligne. Il est sinon de préférence tangent à cette trajectoire au niveau du véhicule automobile (au moment où le calculateur procède au calcul de la trajectoire d'évitement).

Ici, cet axe X est choisi parallèle à une ligne de marquage au sol 23 séparant deux voies de circulation 21.

En variante, cet axe X pourrait être choisi parallèle à l'axe de déplacement du véhicule automobile 1, c'est-à-dire à l'axe longitudinal du véhicule avant l'initiation de la manoeuvre d'évitement.

L'axe Y est horizontal et perpendiculaire à l'axe X.

Sur la figure 2, on a représenté la trajectoire initiale T0 du véhicule automobile 10, telle qu'elle était suivie par le véhicule automobile 1 avant la détection de l'obstacle et l'initiation de la manoeuvre d'évitement.

Dans l'exemple ici représenté, cette trajectoire initiale T0 est linéaire et parallèle à la ligne de marquage au sol 23.

A ce stade, on pourra préciser que les trajectoires considérées dans le présent exposé seront celles suivies par le centre de gravité CG du véhicule automobile 1.

Dans l'exemple ici considéré, l'obstacle 15 se trouve sur la voie de circulation 17 du véhicule automobile 1, à l'avant de celui-ci. L'obstacle 15 est par exemple un autre véhicule, un vélo, un piéton ou bien un objet statique. Cet obstacle 15 peut donc être soit en mouvement, soit immobile.

D'autres obstacles 19, 21 peuvent se trouver dans l'environnement du véhicule automobile 1. Dans l'exemple ici considéré, ces autres obstacles sont situés sur une voie de circulation adjacente différente de celle empruntée par le véhicule automobile 1.

Selon l'invention, le calculateur 5, lorsqu'il détecte un obstacle 15 situé sur la trajectoire du véhicule automobile 1, met en oeuvre un procédé de détermination d'une trajectoire d'évitement T1.

Pour cela, au cours d'une première étape a), le système de détection 9 acquiert des données relatives à l'obstacle 15.

Ici, cet obstacle est caractérisé grâce au système de détection 9 par sa forme, sa nature, sa position relative au véhicule automobile 1 (et notamment sa distance d au véhicule automobile) et ses vitesses longitudinale (selon l'axe X) et latérale (selon l'axe Y) relatives par rapport à celle du véhicule automobile 1.

La forme de l'obstacle est ici obtenue par fusion de données issues de différents capteurs. Elle pourra ainsi être définie par une longueur, une largeur et un point de repère qui sera ensuite utilisé dans les calculs. Comme cela sera bien décrit ci-après, ce point de repère sera par exemple le coin de l'obstacle le plus proche de la trajectoire d'évitement.

La nature de l'obstacle peut également être obtenue par fusion de données. Comme cela sera bien décrit ci-après, cette nature (piéton, camion, voiture ...) sera ensuite utilisée pour ajuster la distance de sécurité que l'on souhaite garder entre l'obstacle et la trajectoire d'évitement (cette distance étant par exemple plus grande pour un piéton dont le comportement est en général plus difficile à anticiper).

Au cours d'une seconde étape b), le calculateur 5 détecte un risque potentiel de collision entre le véhicule automobile 1 et l'obstacle 15 sur la base des données acquises.

Afin de détecter ce risque, le calculateur 5 peut utiliser des données relatives au véhicule automobile 1. Ces données comprennent, par exemple, la vitesse linéaire du véhicule automobile, la vitesse en lacet du véhicule, la position du volant et sa vitesse angulaire.

Si un risque potentiel de collision est détecté, le calculateur met en oeuvre une troisième étape c).

Lors de cette étape c), le calculateur 5 acquiert la position initiale P0 du véhicule automobile 1 au début de la manoeuvre d'évitement. Cette position initiale P0, dont les coordonnées sont notées (X0, Y0), correspond plus précisément à la position courante à l'instant présent du centre de gravité CG du véhicule automobile 1 dans le repère (X, Y).

Lors d'une étape d), le calculateur détermine une première position finale Pf, dont les coordonnées sont notées (Xf, Yf), que le véhicule automobile 1 doit atteindre à l'issue d'une première partie de la trajectoire d'évitement T1. Cette première partie correspond à la portion de la trajectoire d'évitement T1 au cours de laquelle le véhicule automobile 1 s'écarte de sa trajectoire initiale T0. La seconde partie correspondra quant à elle à la portion au cours de laquelle le véhicule automobile 1 reviendra vers sa trajectoire initiale T0.

Lors de cette étape d), le calculateur 5 attribue par exemple à l'abscisse Xf une valeur qui correspond à l'abscisse de la position courante de l'obstacle 15.

Le calculateur 5 attribue par ailleurs à l'ordonnée Yf une valeur qui est supérieure à la plus grande ordonnée de l'obstacle 15 et qui est inférieure à une valeur limite Ylim.

Cette valeur limite Ylim est déterminée par exemple sur la base de données relatives à l'environnement capturé par le système de détection 9. Il peut par exemple s'agir de l'ordonnée de la ligne de marquage au sol 23, ou encore de la plus petite ordonnée des autres obstacles 19, 21 présents dans l'environnement du véhicule automobile 1 (une marge de sécurité pouvant être en outre envisagée).

Lors d'une étape e), le calculateur 5 détermine une position d'impact théorique Pi, dont les coordonnées sont notées (Xi, Yi). Cette position d'impact théorique Pi correspond à une position extrême d'une zone de sécurité située autour de l'obstacle 15 par laquelle on ne souhaite pas que le véhicule automobile 1 passe afin d'éviter l'obstacle 15 en toute sécurité. Ce point d'impact Pi est donc le point situé sur la périphérie de cette zone de sécurité, à la plus petite distance d'une trajectoire d'évitement prévisionnelle. Ce point d'impact est qualifié de théorique en ce sens qu'il n'y aurait pas d'impact entre le véhicule et l'obstacle si le véhicule passait par ce point. Il est en effet calculé de façon à tenir compte de nombreux paramètres tels que les vitesse longitudinale et latérale de l'obstacle, les erreurs de mesure des capteurs...

L'abscisse de cette position d'impact théorique Pi est située entre les abscisses de la position initiale P0 et de la position finale Pf. L'ordonnée de cette position d'impact théorique Pi est située entre les ordonnées de la position initiale P0 et de la position finale Pf.

Pour calculer les coordonnées de ce point d'impact Pi, il est prévu que le système de détection 9 détermine les coordonnées de points du contour de l'obstacle 15 dans le repère (X, Y). Les données proviennent de la caméra frontale et/ ou de l'unité de télémétrie du véhicule automobile 1. Ici, les données en provenance de ces deux capteurs sont fusionnées.

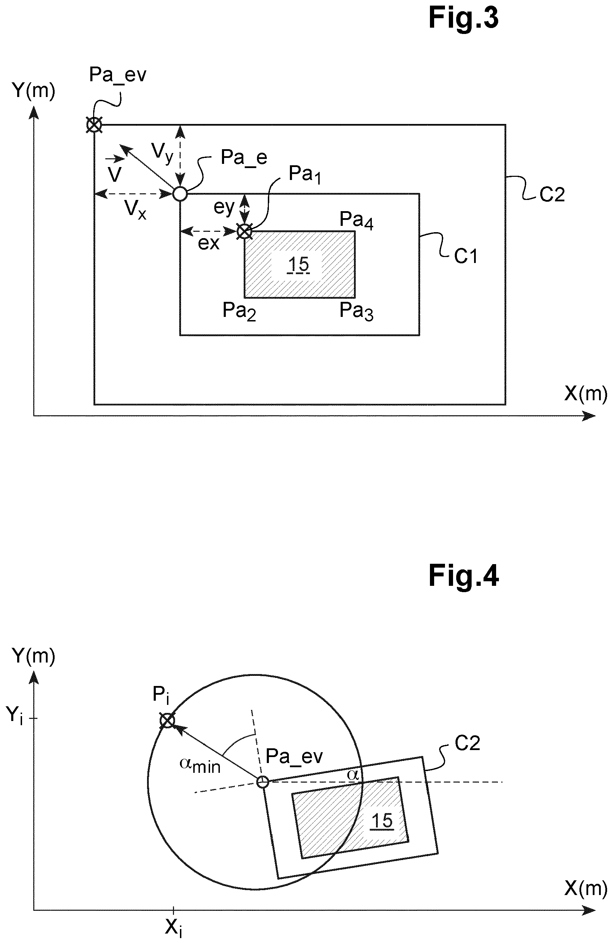

Alors, comme le montre la figure 3, le système de détection détermine les coordonnées de points d'accroche Pa1, Pa2, Pa3, Pa4 de l'obstacle 15. Les points d'accroche Pa1, Pa2, Pa3, Pa4 sont des points « remarquables » de l'obstacle 15 situés à la périphérie de ce dernier. Il s'agit donc de points facilement détectables (par exemple par traitement d'images). Par exemple, dans le cas d'un obstacle 15 formé par une voiture, les points d'accroche correspondent aux quatre coins d'un rectangle modélisant cette voiture.

Le calculateur 5 détermine ensuite lequel de ces points d'accroche sera le plus proche du véhicule automobile 1 lors de la manoeuvre d'évitement. Il se base pour cela sur la trajectoire d'évitement prévisionnelle, qui indique si le véhicule automobile évitera l'obstacle par la gauche ou par la droite.

Pour obtenir cette trajectoire d'évitement prévisionnelle, le calculateur 5 détermine si l'obstacle 15 devra être évité par la gauche ou par la droite sur la base des données environnementales. A titre d'exemple, si l'écart entre l'obstacle 15 le marquage au sol 23 est suffisamment large pour permettre le passage du véhicule automobile 1 entre ces deux éléments, alors l'obstacle pourra être évité par la gauche.

Les termes « droite » et « gauche » sont à comprendre dans le sens usuel relatif à la direction d'avancement du véhicule, et sont définis par rapport à la direction de l'axe X.

Sur l'exemple illustré, l'obstacle 15 est un autre véhicule que l'on veut éviter par la gauche. Le point d'accroche à éviter est alors le coin arrière gauche Pa1 de l'obstacle 15.

Le point d'accroche à éviter Pa1 présente des coordonnées $(X_a, Y_a)$ dans le repère (X, Y).

Les calculs qui suivent décrivent donc une situation dans laquelle la trajectoire d'évitement permet au véhicule d'éviter l'obstacle 15 par la gauche. Dans le cas contraire, les calculs présentés devront être modifiés en conséquence.

Compte tenu de la vitesse éventuelle de l'obstacle 15, de la largeur du véhicule automobile 1, des erreurs de détection possibles et de tout autre paramètre éventuel, la trajectoire d'évitement T1 doit passer à distance de ce point d'accroche Pa1.

Le point d'impact Pi est donc déterminé en fonction de la position de ce point d'accroche Pa1 mais est situé à distance de ce dernier.

Pour tenir compte des erreurs de mesure, le calculateur 5 détermine les coordonnées $(X_{a\_e}, Y_{a\_e})$ d'un premier point décalé Pa_e à l'aide des formules :
[Math. 1]

$$X_{a\_e} = X_a - |e_x| \qquad (1)$$

[Math. 2]

$$Y_{a\_e} = Y_a + |e_y| \qquad (2)$$

où $e_x$ est une erreur de mesure des moyens de détection 9 selon l'axe X et $e_y$ est une erreur de mesure des moyens de détection 9 selon l'axe transversal Y. Dans le cas où la fusion de données est utilisée, l'erreur de mesure prend aussi en compte l'erreur provenant de la fusion de données. Les erreurs de mesure $e_x$, $e_y$ sont prédéterminées et mémorisées dans une mémoire du calculateur.

Sur la figure 3, le cadre C1 correspond à la zone de sécurité autour de l'obstacle 15 par laquelle il convient de ne pas passer afin de ne pas percuter l'obstacle 15, compte tenu des erreurs pouvant éventuellement avoir affecté les mesures effectuées par les moyens de détection 9.

Pour tenir compte du déplacement éventuel de l'obstacle 15, le calculateur détermine tout d'abord un temps avant collision $\tau$ qui correspond au temps avant impact avec l'obstacle 15 si le véhicule automobile ne dévie pas de sa trajectoire initiale T0.

Si le temps avant collision $\tau$ est inférieur à la durée maximale d'une manoeuvre d'évitement automatique (laquelle dépend du système d'évitement et est par exemple de 3 ou 4 secondes), le processus se poursuit de la façon suivante.

Pour tenir compte de la vitesse de déplacement de l'obstacle 15 pour ajuster la distance de sécurité entre la trajectoire du véhicule et l'obstacle, le calculateur 5 détermine les coordonnées ($X_{a\_ev}$, $Y_{a\_ve}$) d'un second point décalé Pa_ev à l'aide des formules :

[Math. 3]
$$X_{a\_ev} = X_{a\_e} + \max(0, d_{Vx})$$

[Math. 4]
$$Y_{a\_ev} = Y_{a\_e} - \max(0, d_{Vy})$$

Dans ces formules, le déplacement de l'obstacle 15 présente des coordonnées notées (dVx, dVy) qui sont obtenues sur la base des coordonnées longitudinales et latérales ($V_x$, $V_y$) du vecteur vitesse de l'obstacle 15 et du temps avant collision $\tau$, selon les formules suivantes :

[Math. 5]
$$d_{Vx} = V_x \tau$$

[Math. 6]
$$d_{Vy} = V_y \tau$$

Sur la figure 3, le cadre C2 correspond à la zone de sécurité autour de l'obstacle 15 par laquelle il convient de ne pas passer afin de ne pas percuter l'obstacle 15, compte tenu des erreurs pouvant éventuellement avoir affecté les mesures effectuées par les moyens de détection 9 et compte tenu de la vitesse de l'obstacle 15.

Comme le montre la figure 4, le calculateur détermine ensuite les coordonnées (Xi, Yi) du point d'impact Pi sur la base des coordonnées du second point décalé Pa_ev et en fonction d'une distance de sécurité minimale dmin à respecter entre la trajectoire d'évitement T1 et l'obstacle 15.

Cette distance prend tout d'abord en compte la demi-largeur du véhicule automobile 1. On rappelle en effet que la trajectoire calculée est celle destinée à être suivie par le centre de gravité du véhicule. Il faut donc tenir compte de l'encombrement du véhicule.

La distance de sécurité minimale dmin, qui correspond à un rayon d'évitement, est donc choisie supérieure ou égale à la moitié de la plus grande largeur du véhicule.

La distance de sécurité minimale dmin peut être choisie invariable.

Ici elle est plutôt déterminée en fonction de la nature (par exemple : véhicule, vélo, piéton...) de l'obstacle 15 à éviter, laquelle est déterminée de manière connue sur la base des données acquises par le système de détection 9. Elle peut également dépendre d'autres facteurs comme l'adhérence de la route (pluie, neige, sur la glace...).

On peut ainsi prévoir de respecter un intervalle de sécurité qui est plus grand pour un vélo que pour un piéton ou que pour un obstacle fixe.

Cette distance de sécurité minimale dmin est orientée par rapport au véhicule et donc par rapport à l'obstacle, de telle sorte qu'elle présente une composante longitudinale selon l'axe X et un composante latérale selon l'axe Y.

Ainsi, les coordonnées (Xi, Yi) du point d'impact Pi sont alors calculées au moyen des équations suivantes :

[Math. 7]

$$X_i = X_{a\_ev} - d_{min}.\,sin\left(\alpha + \frac{\pi}{4}\right)$$

[Math. 8]

$$Y_i = Y_{a\_ev} + d_{min}.\,cos\left(\alpha + \frac{\pi}{4}\right)$$

Où $\alpha$ est l'angle formé entre l'axe X et l'axe longitudinal de l'obstacle 15.

Puis, au cours d'une étape f), le calculateur 5 élabore la trajectoire d'évitement T1. Cette trajectoire est élaborée de sorte que le véhicule passe par la position initiale P0 et par la position finale Pf et qu'il évite la position d'impact théorique Pi par l'extérieur par rapport à l'obstacle (c'est-à-dire par la gauche de la position d'impact théorique Pi si l'obstacle est évité par la gauche, et vis-versa).

La trajectoire d'évitement T1 est ici choisie de façon à présenter une forme polynomiale, ce que l'on peut écrire :

[Math. 9]

$$f(x) = \sum_0^N a_i x^i$$

Où f est la fonction polynomiale de la trajectoire d'évitement, x l'abscisse selon l'axe X et N le degré du polynôme (par exemple compris entre 4 et 6).

Lors de cette étape f), le calculateur 5 cherche à déterminer la valeur des coefficients $a_i$ du polynôme.

Pour cela, on fixe des contraintes que la trajectoire d'évitement T1 doit satisfaire de façon à être sécurisée et de façon à passer par les positions initiale et finale sans passer par la position d'impact théorique.

La première contrainte est que la trajectoire d'évitement T1 passe par la position initiale, ce que l'on peut écrire :

[Math. 10]

f(X0) = Y0

La seconde contrainte est que la trajectoire d'évitement T1 passe par la position finale Pf, ce que l'on peut écrire :

[Math. 11]

f(Xf) = Yf

La troisième contrainte est que la trajectoire d'évitement T1 évite la position d'impact théorique Pi du côté souhaité, ce que l'on peut écrire, pour un évitement à gauche :

[Math. 12]

$$f(Xi) > Yi$$

ou, pour un évitement à droite

[Math. 13]

$$f(Xi) < Yi$$

La quatrième contrainte est que la dérivée première de la trajectoire d'évitement T1 (ce qui correspond à la vitesse latérale du véhicule) est inférieure ou égale à un premier coefficient $\alpha$, cette condition s'exprimant selon la formule :

[Math. 14]

$$\left|\frac{dy}{dx}\right| \leq \alpha$$

La cinquième contrainte est que la dérivée seconde de la trajectoire d'évitement T1 (ce qui correspond à l'accélération latérale du véhicule) est inférieure ou égale à un deuxième coefficient $\beta$, cette condition s'exprimant selon la formule :

[Math. 15]

$$\left|\frac{d^2y}{d^2x}\right| \leq \beta$$

La sixième contrainte est que la dérivée troisième de la trajectoire d'évitement T1 (ce qui correspond à des « à-coup » ou « jerk » en anglais) est inférieure ou égale à un troisième coefficient $\gamma$, cette condition s'exprimant selon la formule :

[Math. 16]

$$\left|\frac{d^3y}{d^3x}\right| \leq \gamma$$

Les deux coefficients $\alpha$, $\beta$ sont relatifs à la limite de contrôlabilité des actionneurs du système et du véhicule. Le troisième coefficient est essentiellement relatif au confort ressenti dans le véhicule.

Ces contraintes permettent de limiter, pour des raisons de sécurité, la capacité du système à actionner les actionneurs, de façon notamment à ce que le conducteur puisse reprendre le contrôle du véhicule à tout moment pendant la manoeuvre d'évitement.

Les valeurs des trois coefficients $\alpha$, $\beta$, $\gamma$ sont prédéterminées, compte tenu des capacités dynamiques du véhicule.

Les trois premières contraintes précitées sont linéaires et simples à résoudre au moyen d'outils d'optimisation numérique.

Les trois autres contraintes d'inégalités sont quant à elles plus difficiles à résoudre.

Pour cela, on peut par exemple utiliser l'une ou l'autre des deux méthodes de résolution décrites ci-après.

Selon une première méthode, la résolution du problème est effectuée au moyen d'une méthode d'optimisation convexe, préférentiellement par la méthode de sommes des carrés (« Sum Of Squares » en anglais). Le principe de cette méthode est bien connu et ne sera pas décrit en détail. On décrira seulement comment l'appliquer au présent cas de figure.

Au préalable, afin de simplifier l'expression des calculs, on peut introduire les deux paramètres suivants :

[Math. 17]

$$\overline{X} = \frac{X0 + Xf}{2}$$

[Math. 18]

$$\check{X} = \frac{Xf - X0}{2}$$

La quatrième contrainte est garantie s'il existe deux polynômes $P_{\alpha 1}(x)$ et $P_{\alpha 2}(x)$, par exemple d'ordre 2, qui sont tels que :

[Math. 19]

$$\alpha - \sum_{1}^{N} i a_i x^{i-1} - P_{\alpha 1}(x)\left[\check{X}^2 - (x - \overline{X})^2\right] \geq 0$$

[Math. 20]

$$P_{\alpha 1} \geq 0$$

[Math. 21]

$$\alpha - \sum_{1}^{N} i a_i x^{i-1} - P_{\alpha 2}(x)\left[\check{X}^2 - (x - \overline{X})^2\right] \geq 0$$

[Math. 22]

$$P_{\alpha 2} \geq 0$$

En d'autres termes, il est possible de trouver une trajectoire d'évitement T1 qui satisfasse la quatrième contrainte si les quatre expressions précitées peuvent être écrites sous forme de sommes de carrés.
On peut alors écrire des expressions similaires pour les cinquième et sixième contraintes.
Ainsi, la cinquième contrainte est garantie s'il existe deux polynômes $P_{\beta 1}(x)$ et $P_{\beta 2}(x)$, par exemple d'ordre 2, qui sont tels que :

[Math. 23]

$$\beta - \sum_{2}^{N} i(i-1) a_i x^{i-2} - P_{\beta 1}(x)\left[\check{X}^2 - (x - \overline{X})^2\right] \geq 0$$

[Math. 24]

$$P_{\beta 1} \geq 0$$

[Math. 25]

$$\beta - \sum_{2}^{N} i(i-1)a_i x^{i-2} - P_{\beta 2}(x)\left[\check{X}^2 - (x - \overline{X})^2\right] \geq 0$$

[Math. 26]

$$P_{\beta 2} \geq 0$$

De la même façon, la sixième contrainte est garantie s'il existe deux polynômes $P_{\gamma 1}(x)$ et $P_{\gamma 2}(x)$, par exemple d'ordre 2, qui sont tels que :

[Math. 27]

$$\gamma - \sum_{3}^{N} i(i-1)a_i x^{i-3} - P_{\gamma 1}(x)\left[\check{X}^2 - (x - \overline{X})^2\right] \geq 0$$

[Math. 28]

$$P_{\gamma 1} \geq 0$$

[Math. 29]

$$\gamma - \sum_{3}^{N} i(i-1)a_i x^{i-3} - P_{\gamma 2}(x)\left[\check{X}^2 - (x - \overline{X})^2\right] \geq 0$$

[Math. 30]

$$P_{\gamma 2} \geq 0$$

Si le calculateur détermine l'existence d'une trajectoire d'évitement T1 permettant de répondre à l'ensemble des six contraintes, alors la manoeuvre d'évitement peut être initiée lors d'une ultime étape.

Dans le cas contraire, l'idée va être de jouer sur la position finale Pf jusqu'à trouver une trajectoire qui satisfasse les six contraintes.

Pour cela, l'abscisse Xf peut être incrémentée d'une valeur $\Delta x$ prédéterminée jusqu'à ce que le calculateur trouve une trajectoire d'évitement T1.

On peut également ajuster la valeur de l'ordonnée Yf de la position finale, par exemple en l'incrémentant ou en la réduisant, en restant toutefois dans les limites détaillées supra.

En variante (ou en supplément si la modification de la position finale n'a pas pu permettre de trouver de trajectoire d'évitement T1 adéquate), la sixième contrainte peut être négligée. Cette contrainte est en effet relative au confort du passager et non à sa sécurité en ce sens qu'elle empêche le véhicule automobile de changer de direction de manière trop brusque afin d'éviter un « à-coup » qui serait désagréable pour le passager.

Alors cette première méthode de résolution permet-elle de toujours trouver une trajectoire d'évitement T1 convenable.

On peut maintenant détailler la deuxième méthode de résolution du problème de contraintes. Cette deuxième méthode est une méthode d'optimisation convexe par échantillonnage basée sur une résolution par traitement d'un nombre défini de problèmes (ou Linear Programming en anglais), chaque problème correspondant à l'expression de la contrainte en un point de l'échantillonnage des points de la trajectoire d'évitement T1.

Pour la mettre en oeuvre, on considère une série $S_x$ de M+1 points dont les abscisses sont régulièrement réparties entre les abscisses X0 et Xf des points initial et final. Le nombre M est choisi de façon à être supérieur strictement à deux.

La série $S_x$ de points peut être écrite sous la forme :

[Math. 31]

$$S_x = \left\{ x_j, x_j = x_0 + j\frac{X_f - X_0}{M} \; avec \; j = 0{:}M \right\}$$

Alors, les six contraintes doivent être vérifiées pour cette série de M+1 points $x_j$.

On notera ainsi que la quatrième contrainte d'inégalité est satisfaite si la dérivée première de la fonction polynomiale f satisfait l'équation suivante pour tous les points de la série $S_x$ :

[Math. 32]

$$\sum_{1}^{N} i a_i x^{i-1} \leq \alpha$$

La cinquième contrainte d'inégalité est satisfaite si la dérivée seconde de la fonction polynomiale f satisfait l'équation suivante pour tous les points de la série $S_x$ :

[Math. 33]

$$\sum_{1}^{N} i(i-1) a_i x^{i-2} \leq \beta$$

La sixième contrainte d'inégalité est satisfaite si la dérivée troisième de la fonction polynomiale f satisfait l'équation suivante pour tous les points de la série $S_x$ :

[Math. 34]

$$\sum_{1}^{N} i(i-1) a_i x^{i-3} \leq \alpha$$

Alors, si le calculateur 5 détermine l'existence d'une trajectoire d'évitement T1 permettant de répondre à l'ensemble de ces équations, la manoeuvre d'évitement peut être initiée selon cette trajectoire.

Dans le cas contraire, comme expliqué supra, on peut déplacer le point final Pf et/ou ne pas considérer la sixième contrainte, de façon à trouver une trajectoire d'évitement T1 adéquate.

Cette méthode présente un nombre plus élevé d'équations à résoudre que la méthode de la somme des carrés. Cependant, toutes les conditions sont linéaires et sont donc plus simples à résoudre. Aussi, cette méthode de résolution peut-elle être facilement mise en oeuvre en temps réel par le calculateur 5 du véhicule automobile 1.

Comme cela a été expliqué supra, la portion de la trajectoire d'évitement T1 comprise entre les positions initiale P0 et finale Pf ne constitue en pratique qu'une première partie de cette trajectoire.

A moins que le conducteur ne reprenne le contrôle du véhicule, il est en effet préférable de calculer également une seconde partie de la trajectoire d'évitement T1 qui permette au véhicule automobile 1 de revenir sur sa trajectoire initiale T0.

Le calcul de cette seconde partie peut commencer après le démarrage de la manoeuvre d'évitement, de façon à ce cette manoeuvre d'évitement puisse être mise en oeuvre le plus rapidement possible.

Le calcul de la seconde partie de la trajectoire d'évitement est sensiblement identique à celui de la première partie. On ne décrira donc ici que ce qui distingue ces opérations de calcul.

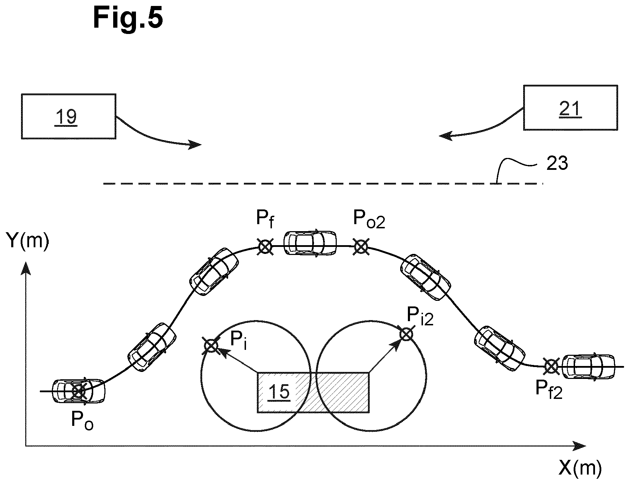

En l'espèce, comme le montre la figure 5, la détermination de la position initiale de la seconde partie de la trajectoire d'évitement T1, ci-après appelée seconde position initiale P02, est réalisée de la façon suivante.

On pourrait prévoir que la seconde position initiale P02 soit confondue avec la position finale Pf. Toutefois, pour éviter de revenir trop vite vers la trajectoire initiale T0 et de percuter l'obstacle 15, on préfère fixer la seconde position initiale P02 à distance de la position finale Pf.

En l'espèce, l'abscisse $X_{02}$ de la seconde position initiale P02 est choisie supérieure ou égale à la longueur de l'obstacle 15. Elle est en outre choisie de telle sorte que le véhicule ait le temps de se stabiliser en roulant en ligne droite pendant une durée prédéterminée.

Pour privilégier le confort des passagers, l'ordonnée $Y_{02}$ de la seconde position initiale P02 est choisie égale à l'ordonnée de la position finale Pf.

On peut alors écrire :

$$[\text{Math. 35}]$$

$$X_{O2} = X_f + \max\left(V * \tau_{stab}, L_{cible} + 2\left(d_{Vx} + e_{cap\_x}\right)\right) + \Delta_X$$

$$[\text{Math. 36}]$$

$$Y_{O2} = Y_f$$

Dans ces équations, $\tau_{stab}$ est le temps nécessaire pour que le véhicule se stabilise, $L_{cible}$ est la longueur de l'obstacle 15, V est la vitesse du véhicule automobile 1, et $\Delta x$ est une marge de sécurité prédéterminée. Les paramètres $\tau_{stab}$ et $\Delta x$ peuvent être fixés en fonction de la vitesse du véhicule automobile

Le choix de l'abscisse de la seconde position finale Pf2 (celle située à la fin de la trajectoire d'évitement T1) est assez libre. Elle peut être fixée en fonction de la dynamique souhaitée (conduite sport ou conduite souple).

Le choix de la seconde position d'impact théorique Pi2 est quant à lui réalisé de la même façon que pour le point d'impact Pi, à ceci près que la distance de sécurité minimale dmin peut éventuellement être choisie plus grande.

Les autres calculs sont pour leur part réalisés d'une façon homologue à celle exposée ci-dessus.

De la même manière, plusieurs obstacles peuvent être simultanément pris en compte, ce qui générera de multiples points d'impact théoriques, par exemple des obstacles fixes (comme une bordure de route, une barrière de route, un poteau...) ou mobiles (des véhicules se trouvant sur les voies adjacentes dans le même sens ou en sens inverse). La prise en compte de ces obstacles pourra être réalisée avec ou sans prédiction de trajectoire. Pour les obstacles mobiles, on pourra par exemple estimer leurs trajectoires (pour une durée donnée) afin d'ajuster en correspondance la valeur limite Ylim.

**Revendications**

1. Procédé de détermination d'une trajectoire d'évitement (T1) d'un véhicule automobile (1), comprenant des étapes de :

   - acquisition de données relatives à au moins un obstacle (15) situé dans l'environnement du véhicule automobile (1) au moyen d'un système de détection (9), lesdites données comprenant une distance entre le véhicule et l'obstacle,
   - détermination d'une position finale (Pf) à atteindre pour le véhicule automobile (1) en fonction de la position de l'obstacle (15) et d'une position initiale (P0) du véhicule automobile (1),
   - calcul d'une position d'impact théorique (Pi) située entre la position initiale (P0) et la position finale (Pf), en fonction au moins d'une distance minimale ($d_{min}$) à respecter entre la trajectoire d'évitement (T1) et l'obstacle (15), et
   - élaboration de la trajectoire d'évitement (T1) de sorte que le véhicule automobile (1) passe par la position initiale (P0) et par la position finale (Pf) et qu'il évite la position d'impact théorique (Pi) par l'extérieur par rapport à l'obstacle (15), **caractérisé en ce que** la trajectoire d'évitement (T1) étant élaborée de telle sorte que ses dérivées, notamment première, deuxième, et troisième dérivées, répondent à des contraintes d'inégalité prédéterminées.

2. Procédé selon la revendication précédente, dans lequel ladite au moins une distance de sécurité minimale ($d_{min}$) est orientée par rapport au véhicule automobile (1), de façon à présenter au moins une composante longitudinale par rapport à l'axe longitudinal du véhicule automobile (1), et préférentiellement aussi une composante latérale.

3. Procédé selon l'une des revendications précédentes, dans lequel, pour déterminer la position d'impact théorique (Pi), il est prévu de :

   - déterminer la position d'un premier point ($Pa_1$) de l'obstacle le plus proche d'une trajectoire d'évitement prévisionnelle sur la base des données acquises par le système de détection (9), et de
- déduire la position d'impact théorique (Pi) en fonction de la position dudit premier point (Pa$_1$), de la distance minimale (d$_{min}$) et d'au moins une autre donnée.

4. Procédé selon la revendication précédente, dans lequel ladite autre donnée appartient à la liste suivante :

   - une incertitude prédéterminée du système de détection (9),
   - la nature de l'obstacle (15), et
   - la vitesse relative de l'obstacle (15) par rapport au véhicule automobile (1) et éventuellement aussi sa direction.

5. Procédé selon la revendication précédente, dans lequel il est prévu de déterminer une zone de sécurité autour dudit au moins un obstacle (15) en fonction de la distance minimale (d$_{min}$) et éventuellement aussi de ladite au moins une autre donnée.

6. Procédé selon l'une des deux revendications précédentes, dans lequel, pour déterminer la position du point d'impact, il est prévu de :

   - déterminer les vitesses relatives longitudinale et latérale de l'obstacle (15) par rapport au véhicule automobile (1),
   - en déduire un temps avant impact théorique entre le véhicule automobile (1) et l'obstacle (15),
   - déterminer la position de l'obstacle (15) à un temps ultérieur correspondant au temps avant impact théorique, et
   - en déduire la position d'impact théorique (Pi).

7. Procédé selon la revendication précédente, dans lequel l'étape de détermination de la position de l'obstacle (15) est mise en oeuvre seulement si le temps avant impact théorique est inférieur à un seuil prédéterminé.

8. Procédé selon l'une des revendications précédentes, dans lequel la trajectoire d'évitement (T1) est élaborée de manière à satisfaire une contrainte qui porte sur le passage de la trajectoire d'évitement (T1) par l'extérieur de la position d'impact théorique (Pi).

9. Procédé selon la revendications précédentes, dans lequel, si aucune trajectoire d'évitement (T1) dont les dérivées répondent auxdites contraintes d'inégalité n'est trouvée, il est prévu une étape d'ajustement de la position finale (Pf) du véhicule automobile (1) puis une nouvelle étape d'élaboration de la trajectoire d'évitement (T1).

10. Procédé selon l'une des deux revendications précédentes, dans lequel la trajectoire d'évitement (T1) est élaborée au moyen d'une méthode d'optimisation convexe, notamment par une méthode des sommes des carrés ou par échantillonnage.

11. Procédé selon l'une des revendications 1 à 10, dans lequel le véhicule automobile (1) roulant à son arrivée à la position initiale (P0) selon une trajectoire initiale (T0), il est prévu une opération de détermination d'une seconde partie de la trajectoire d'évitement (T1) permettant le retour du véhicule automobile (1) sur la trajectoire initiale (T0), qui comporte des étapes de :

   - détermination d'une seconde position finale (Pf2) en fonction de la position dudit au moins un obstacle (15) par rapport au véhicule automobile (1) et en fonction de ladite position finale (Pf),
   - détermination d'une seconde position d'impact théorique (Pi2) située entre la position finale (Pf) et la seconde position finale (Pf2), en fonction au moins d'une distance minimale à respecter entre la trajectoire d'évitement (T1) et l'obstacle (15), et
   - détermination de la seconde partie de la trajectoire d'évitement (T1) de sorte que le véhicule automobile (1) passe par la seconde position finale (Pf2) et évite la seconde position d'impact théorique (Pi2) par l'extérieur par rapport à l'obstacle (15).

12. Système de détermination d'une trajectoire d'évitement d'un véhicule automobile comprenant :

   - un système de détection (9) apte à acquérir des données relatives à un obstacle (15) situé dans l'environnement du véhicule automobile (1), et
   - un calculateur (5) configuré à mettre en oeuvre un procédé conforme à l'une des revendications précédentes.

**EP 3 994 042 B1**

**Patentansprüche**

1. Verfahren zum Bestimmen einer Ausweichtrajektorie (T1) eines Kraftfahrzeug (1), umfassend die folgenden Schritte:

   - Erfassen von Daten bezüglich mindestens eines Hindernisses (15), das in dem Umfeld des Kraftfahrzeugs (1) gelegen ist, mittels eines Detektionssystems (9), wobei die Daten einen Abstand zwischen dem Fahrzeug und dem Hindernis umfassen,
   - Bestimmen einer zu erreichenden finalen Position (Pf) für das Kraftfahrzeug (1) in Abhängigkeit von der Position des Hindernisses (15) und von einer initialen Position (P0) des Kraftfahrzeugs (1),
   - Berechnen einer theoretischen Kollisionsposition (Pi), die zwischen der initialen Position (P0) und der finalen Position (Pf) gelegen ist, in Abhängigkeit mindestens von einem zu beachtenden Mindestabstand ($d_{min}$) zwischen der Ausweichtrajektorie (T1) und dem Hindernis (15), und
   - Ermitteln der Ausweichtrajektorie (T1) derart, dass das Kraftfahrzeug (1) die initiale Position (P0) und die finale Position (Pf) durchfährt und dass es der theoretischen Kollisionsposition (Pi) außen in Bezug auf das Hindernis (15) ausweicht, **dadurch gekennzeichnet, dass** die Ausweichtrajektorie (T1) so ermittelt wird, dass ihre Ableitungen, insbesondere die erste, zweite und dritte Ableitung, vorbestimmten Ungleichheitsbedingungen entsprechen.

2. Verfahren nach dem vorhergehenden Anspruch, bei dem der mindestens eine minimale Sicherheitsabstand ($d_{min}$) in Bezug auf das Kraftfahrzeug (1) so ausgerichtet ist, dass er mindestens eine Längskomponente bezogen auf die Längsachse des Kraftfahrzeugs (1) und bevorzugt auch eine seitliche Komponente aufweist.

3. Verfahren nach einem der vorhergehenden Ansprüche, bei dem, zum Bestimmen der theoretischen Kollisionsposition (Pi), vorgesehen ist:

   - die Position eines ersten Punkts ($Pa_1$) des Hindernisses, der zu einer voraussichtlichen Ausweichtrajektorie nächstgelegen ist, auf der Grundlage der von dem Detektionssystem (9) erfassten Daten zu bestimmen, und
   - die theoretische Kollisionsposition (Pi) in Abhängigkeit von der Position des ersten Punkts ($Pa_1$) , von dem Mindestabstand ($d_{min}$) und von mindestens einem weiteren Datenelement abzuleiten.

4. Verfahren nach dem vorhergehenden Anspruch, bei dem das andere Datenelement der folgenden Liste angehört:

   - eine vorbestimmte Unsicherheit des Detektionssystems (9),
   - die Art des Hindernisses (15) und
   - die relative Geschwindigkeit des Hindernisses (15) in Bezug auf das Kraftfahrzeug (1) und gegebenenfalls auch seine Richtung.

5. Verfahren nach dem vorhergehenden Anspruch, bei dem vorgesehen ist, einen Sicherheitsbereich um das mindestens eine Hindernis (15) herum in Abhängigkeit von dem Mindestabstand ($d_{min}$) und gegebenenfalls auch von dem mindestens einen weiteren Datenelement zu bestimmen.

6. Verfahren nach einem der beiden vorhergehenden Ansprüche, bei dem, zum Bestimmen der Position des Kollisionspunkts , vorgesehen ist:

   - die relativen Längs- und Seitengeschwindigkeiten des Hindernisses (15) in Bezug auf das Kraftfahrzeug (1) zu bestimmen,
   - daraus eine Zeit vor einer theoretischen Kollision zwischen dem Kraftfahrzeug (1) und dem Hindernis (15) abzuleiten,
   - die Position des Hindernisses (15) zu einer späteren Zeit zu bestimmen, die der Zeit vor der theoretischen Kollision entspricht, und
   - daraus die theoretische Kollisionsposition (Pi) abzuleiten.

7. Verfahren nach dem vorhergehenden Anspruch, bei dem der Schritt des Bestimmens der Position des Hindernisses (15) nur durchgeführt wird, wenn die Zeit vor der theoretischen Kollision kürzer als ein vorbestimmter Schwellenwert ist.

8. Verfahren nach einem der vorhergehenden Ansprüche, bei dem die Ausweichtrajektorie (T1) so ermittelt wird, dass sie eine Bedingung erfüllt, die sich auf das Durchfahren der Ausweichtrajektorie (T1) außerhalb der theoretischen Kollisionsposition (Pi) bezieht.

9. Verfahren nach dem vorhergehenden Anspruch, bei dem, wenn keine Ausweichtrajektorie (T1), deren Ableitungen die Ungleichheitsbedingungen erfüllen, gefunden wird, ein Schritt des Anpassens der finalen Position (Pf) des Kraftfahrzeugs (1) und dann ein neuer Schritt des Ermittelns der Ausweichtrajektorie (T1) vorgesehen ist.

10. Verfahren nach einem der beiden vorhergehenden Ansprüche, bei dem die Ausweichtrajektorie (T1) mittels einer Methode der konvexen Optimierung ermittelt wird, insbesondere durch eine Methode der Summe der Quadrate oder durch Sampling.

11. Verfahren nach einem der Ansprüche 1 bis 10, bei dem, wenn das Kraftfahrzeug (1) bei seinem Eintreffen an der initialen Position (P0) gemäß einer initialen Trajektorie (T0) fährt, ein Vorgang des Bestimmens eines zweiten Teils der Ausweichtrajektorie (T1) vorgesehen ist, der die Rückkehr des Kraftfahrzeugs (1) auf die initiale Trajektorie (T0) ermöglicht, der die folgenden Schritte umfasst:

- Bestimmen einer zweiten finalen Position (Pf2) in Abhängigkeit von der Position des mindestens einen Hindernisses (15) in Bezug auf das Kraftfahrzeug (1) und in Abhängigkeit von der finalen Position (Pf),
- Bestimmen einer zweiten theoretischen Kollisionsposition (Pi2), die zwischen der finalen Position (Pf) und der zweiten finalen Position (Pf2) gelegen ist, in Abhängigkeit mindestens von einem zu beachtenden Mindestabstand zwischen der Ausweichtrajektorie (T1) und dem Hindernis (15), und
- Bestimmen des zweiten Teils der Ausweichtrajektorie (T1) so, dass das Kraftfahrzeug (1) die zweite finale Position (Pf2) durchfährt und der zweiten theoretischen Kollisionsposition (Pi2) außen in Bezug auf das Hindernis (15) ausweicht.

12. System zur Bestimmung einer Ausweichtrajektorie eines Kraftfahrzeugs, umfassend:

- ein Detektionssystem (9), das geeignet ist, Daten bezüglich eines Hindernisses (15) zu erfassen, das im Umfeld des Kraftfahrzeugs (1) gelegen ist, und
- einen Rechner (5), der dazu ausgestaltet ist, ein Verfahren nach einem der vorhergehenden Ansprüche durchzuführen.

**Claims**

1. Method for determining an avoidance path (T1) of a motor vehicle (1), comprising steps of:

- acquiring data relating to at least one obstacle (15) located in the environment of the motor vehicle (1) by means of a detecting system (9), said data comprising a distance between the vehicle and the obstacle,
- determining a final position (Pf) to be reached by the motor vehicle (1) depending on the position of the obstacle (15) and on an initial position (P0) of the motor vehicle (1),
- computing a theoretical impact position (Pi) located between the initial position (P0) and the final position (Pf), depending on at least a minimum distance ($d_{min}$) to be kept between the avoidance path (T1) and the obstacle (15), and
- generating the avoidance path (T1) so that the motor vehicle (1) passes through the initial position (P0) and through the final position (Pf) and so that the motor vehicle avoids the theoretical impact position (Pi) to the outside with respect to the obstacle (15), **characterized in that** the avoidance path (T1) is generated such that its derivatives, and especially its first, second, and third derivatives, meet predetermined inequality constraints.

2. Method according to the preceding claim, wherein said at least one minimum safety distance ($d_{min}$) is oriented with respect to the motor vehicle (1), so as to have at least a longitudinal component with respect to the longitudinal axis of the motor vehicle (1), and preferably also a lateral component.

3. Method according to one of the preceding claims, wherein, in order to determine the theoretical impact position (Pi), provision is made to:

- determine the position of a first point ($Pa_1$) of the obstacle closest to a predicted avoidance path on the basis of the data acquired by the detecting system (9), and to
- deduce the theoretical impact position (Pi) depending on the position of said first point ($Pa_1$), on the minimum

distance ($d_{min}$) and on at least one other datum.

4. Method according to the preceding claim, wherein said other datum belongs to the following list:

- a predetermined uncertainty of the detecting system (9),
- the nature of the obstacle (15), and
- the relative speed of the obstacle (15) with respect to the motor vehicle (1) and possibly also its direction.

5. Method according to the preceding claim, wherein provision is made to determine a safety zone around said at least one obstacle (15) depending on the minimum distance ($d_{min}$) and possibly also on said at least one other datum.

6. Method according to one of the two preceding claims, wherein, to determine the position of the point of impact, provision is made to:

- determine the relative longitudinal and lateral speeds of the obstacle (15) with respect to the motor vehicle (1),
- deduce therefrom a time before theoretical impact between the motor vehicle (1) and the obstacle (15),
- determine the position of the obstacle (15) at a later time corresponding to the time before theoretical impact, and
- deduce therefrom the theoretical impact position (Pi) .

7. Method according to the preceding claim, wherein the step of determining the position of the obstacle (15) is implemented only if the time before theoretical impact is less than a predetermined threshold.

8. Method according to one of the preceding claims, wherein the avoidance path (T1) is generated so as to meet a constraint that relates to the passage of the avoidance path (T1) outside the theoretical impact position (Pi).

9. Method according to the preceding claim, wherein, if no avoidance path (T1) the derivatives of which meet said inequality constraints is found, a step of adjusting the final position (Pf) of the motor vehicle (1) then a new step of generating the avoidance path (T1) are provided.

10. Method according to one of the two preceding claims, wherein the avoidance path (T1) is generated by means of a method of convex optimization, especially via a sum-of-squares method or via sampling.

11. Method according to one of Claims 1 to 10, wherein the motor vehicle (1) being, on its arrival at the initial position (P0), driven on an initial path (T0), provision is made for an operation for determining a second portion of the avoidance path (T1) allowing the motor vehicle (1) to return to the initial path (T0), which comprises steps of:

- determining a second final position (Pf2) depending on the position of said at least one obstacle (15) with respect to the motor vehicle (1) and depending on said final position (Pf),
- determining a second theoretical impact position (Pi2) located between the final position (Pf) and the second final position (Pf2), depending on at least a minimum distance to be kept between the avoidance path (T1) and the obstacle (15), and
- determining the second portion of the avoidance path (T1) so that the motor vehicle (1) passes through the second final position (Pf2) and avoids the second theoretical impact position (Pi2) to the outside with respect to the obstacle (15).

12. System for determining an avoidance path of a motor vehicle, comprising:

- a detecting system (9) able to acquire data relating to an obstacle (15) located in the environment of the motor vehicle (1), and
- a computer (5) configured to implement a method according to any of the preceding claims.

**Fig.1**

**Fig.2**

# Fig.3

# Fig.4

# Fig.5

**RÉFÉRENCES CITÉES DANS LA DESCRIPTION**

**Documents brevets cités dans la description**

- US 2018099667 A1
- DE 102013009252